# EUROPÄISCHE PATENTANMELDUNG

(11) **EP 1 624 214 A2**
(43) Veröffentlichungstag der Anmeldung: **08.02.2006**
(21) Anmeldenummer: 05015170.3
(22) Anmeldetag: 13.07.2005
(51) Int. Cl.: F16D 23/14

(54) **Kupplungsanordnung**

(30) Priorität: 28.07.2004 DE 102004036519
(71) Anmelder: ZF FRIEDRICHSHAFEN AG, 88046 Friedrichshafen (DE)
(72) Erfinder: Lindner, Joachim, 97456 Dittelbrunn (DE); Brunner, Matthias, 97525 Schwebheim (DE)

(57) **Zusammenfassung**

Die Erfindung beschreibt eine Kupplungsanordnung für ein Kraftfahrzeug mit einer Eingangswelle, einer Hauptabtriebswelle und einer Nebenabtriebswelle, welche beide koaxial zu der Eingangswelle verlaufen. Zwischen der Eingangswelle und der Hauptabtriebswelle ist eine trennbare Reibungskupplung angeordnet, welche über eine Ausrückfeder mit einer axial verschiebbar auf der Nebenabtriebswelle angeordneten Ausrückeinrichtung betätigbar ist. Als Nebenabtriebskupplung dient ein Drehmomentübertragungselement zur Verbindung der Eingangswelle mit der Nebenabtriebswelle, das eine drehfest mit der Nebenabtriebswelle verbundene Nabe aufweist und wobei das Drehmomentübertragungselement axial zwischen der Reibungskupplung und deren Ausrückeinrichtung angeordnet ist. Zur Schaffung einer verschleißfesteren Welle-Nabe-Verbindung und zur Vergrößerung der Führungslänge der Ausrückeinrichtung schlägt die Erfindung vor, die Ausrückeinrichtung für die Reibungskupplung auf der Nabe des Drehmomentübertragungselements anzuordnen.

## Beschreibung

Die Erfindung betrifft eine Kupplungsanordnung für ein Kraftfahrzeug gemäß dem Oberbegriff von Patentanspruch 1, insbesondere eine Nebenabtriebskupplung, mit der sich zusätzlich zum Fahrantrieb Nebenaggregate antreiben lassen.

Eine derartige gattungsgemäße Kupplungsanordnung wird beispielsweise in dem Buch Kraftfahrzeugkupplungen: Funktion und Auslegung (Die Bibliothek der Technik; Band 138, Verlag Moderne Industrie, 1997) beschrieben. Bei der dort auf Seite 18 dargestellten Kupplungsanordnung sind auf der als Hohlwelle ausgebildeten Nebenabtriebswelle eine Nabe eines Drehmomentübertragungselementes und eine axial verschiebbare Ausrückeinrichtung zur Betätigung einer Anfahr- und Schaltkupplung für eine innerhalb der Hohlwelle geführten Hauptabtriebswelle unmittelbar axial benachbart angeordnet.

Beim Betreiben der Kupplungsanordnung hat sich herausgestellt, dass die üblicherweise als Keilwellenverbindung oder Kerbverzahnung ausgeführte Welle-Nabe-Verbindung des Nebenabtriebs aufgrund von Schwingungen des Fahrzeugantriebes und aufgrund der im Verhältnis zu deren Durchmesser axial sehr kurz ausgeführten Welle-Nabe-Verbindung einem erheblichen Verschleiß unterliegt.

Die Führungslänge der Ausrückeinrichtung ist ausserdem sehr kurz gehalten und nicht verlängerbar, weil zum einen auf der zu der Nabe gerichteten Seite eine Kompensationswegstrecke zum Ausgleich eines Reibbelagsverschleißes der Reibungskupplung und zum anderen auf der dieser abgewandten Seite eine Betätigungswegstrecke zum Betätigen der Reibungskupplung vorgehalten werden muß. Diese relativ kurze Führungslänge der Ausrückeinrichtung auf der Hohlwelle macht sich ebenfalls nachteilig bemerkbar, weil deshalb die Ausrückeinrichtung beim Einleiten einer Betätigungskraft bspw. über eine dort nicht dargestellte Kupplungsgabel gegenüber der Hohlwelle verkanten und somit auf Kosten des Komforts ruckartige Ein-und Ausrückvorgänge zur Folge haben kann.

Von dem genannten Stand der Technik ausgehend, soll eine Kupplungsanordnung geschaffen werden, wobei die Welle-Nabe-Verbindung verschleißfester ausgebildet ist, und wobei die Ausrückeinrichtung sicherer geführt werden kann.

Die vorstehend genannte Aufgabe wird gelöst durch eine gattungsgemäße Kupplungsanordnung, welche zusätzlich das im Kennzeichen des Anspruchs 1 aufgeführte Merkmal aufweist.

Die Anordnung der Ausrückeinrichtung für die schaltbare Reibungskupplung unmittelbar auf der Nabe des Drehmomentübertragungselementes, d. h. die damit geschaffene radiale Anordnung von Ausrückeinrichtung und Nabe, hat den Vorteil, dass die als Formschlussverbindung ausgeführte Welle-Nabe-Verbindung über eine axial längere Distanz ausgeführt werden kann, wobei sich die Nabe praktisch axial bis zum angrenzenden Getriebe erstrecken kann. Mit dieser radialen Staffelung kann auch gleichzeitig die Führungslänge der Ausrückeinrichtung auf der Getriebeeingangswelle erheblich vergrößert werden, wodurch eine Kupplungsbetätigung ruckfrei erfolgen und der Betätigungskomfort und die Lebensdauer der Kupplungsanordnung erheblich steigen kann.

Gemäß einer Weiterbildung der Erfindung hat es sich als vorteilhaft erwiesen, an dem Drehmomentübertragungselement einen Torsionsschwingungsdämpfer auszubilden, wodurch von der Eingangswelle eingeleitete Drehmomentstöße gedämpft werden und die Welle-Nabe-Verbindung nochmals deutlich weniger verschlissen wird.

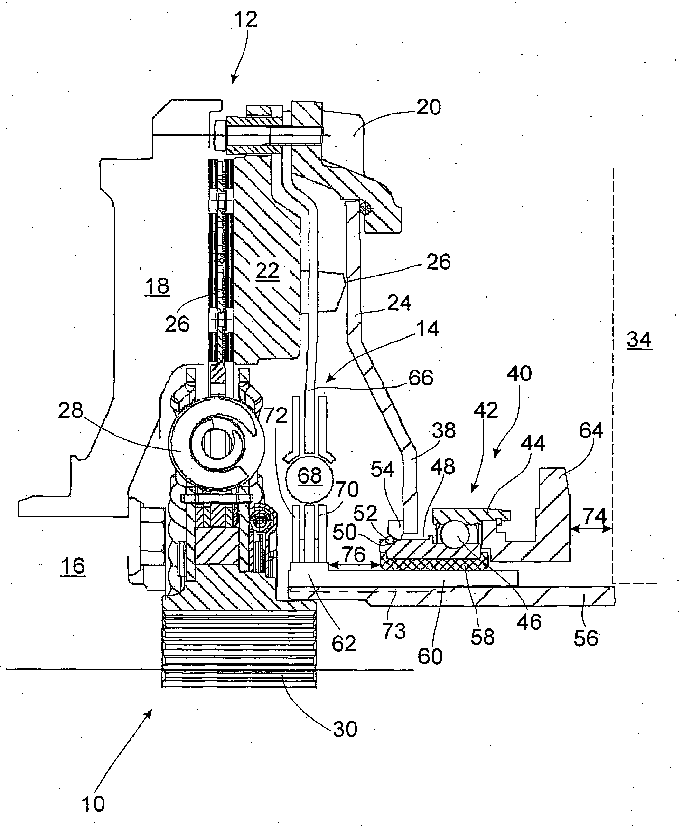

Nachfolgend wird die Erfindung beispielhaft anhand der beiliegenden Zeichnung näher erläutert.

Die Figur zeigt eine Kupplungsanordnung 10 mit einer als Anfahr- und Schaltkupplung ausgebildeten Reibungskupplung 12 und einer nicht schaltbaren, permanent im Eingriff stehenden Nebenabtriebskupplung 14.

Die in gezogener Bauweise ausgeführte Reibungskupplung 12 besteht im Wesentlichen aus einem mit der Kurbelwelle 16 eines zeichnerisch nicht dargestellten Verbrennungsmotors drehfest verbundenen Schwungrad 18, welches wiederum fest mit einem Kupplungsgehäuse 20 verbunden ist. Zwischen dem Schwungrad 18 und dem Kupplungsgehäuse 20 ist eine Anpressplatte 22 angeordnet, welche durch eine als Membranfeder 24 ausgeführte Ausrückfeder in Richtung auf das Schwungrad 18 belastet werden kann. Zwischen der Anpressplatte 22 und dem Schwungrad 18 ist eine Kupplungsscheibe 26 eingespannt, die über eine Dämpfungseinrichtung 28 und eine Nabe 30 drehfest, jedoch axial verschiebbar, formschlüssig mit einer nicht dargestellten Eingangswelle eines nachfolgenden, nur gestrichelt angedeuteten Gangwechseigetriebes 34 verbunden ist. Die Anpressplatte 22 ist in Umfangsrichtung fest mit dem Kupplungsgehäuse 20 verbunden, jedoch in axialer Richtung verlagerbar angeordnet. Die Membranfeder 24 stützt sich an deren Außenumfang am Kupplungsgehäuse 20 und an einem weiter radial innen liegenden Anlagebereich 36 an der Anpressplatte 22 ab. Die Membranfeder 24 weist nach radial innen gerichtete Federzungen 38 auf, die zur Aufnahme und Übertragung einer Ausrückkraft an einer Ausrückeinrichtung 40 angreifen.

Die Ausrückeinrichtung 40 zum Betätigen der Kraftfahrzeugreibungskupplung 12 umfasst zunächst ein Ausrücklager 42 mit einem Außenring 44, Wälzkörpern 46 und einem Innenring 48. Letzterer ist in Richtung der Reibungskupplung 12 axial verlängert und weist eine Ringnut 50 auf, in der ein Lastring 52 axial fixiert eingelegt ist. An diesem Lastring 52 stützen sich über einen Ausrückring 54 die Membranfederzungen 38 ab.

Die Ausrückeinrichtung 40 ist konzentrisch um eine Nebenabtriebswelle 56 ausgebildete angeordnet, wobei zur Realisierung einer Axialführung der Lagerinnenring 48 mit einer aus einem Kunststoff gefertigten Büchse 58 formschlüssig und axial fixiert verbunden ist, welche auf einem Rohransatz 60 einer der Nebenabtriebskupplung 14 zugeordneten Nabe 62 axial, innerhalb eines vorgegebenen Bereiches, verschiebbar gelagert ist. Zur Einleitung einer Ausrückkraft auf die Reibungskupplung 12 weist die Ausrückeinrichtung 40 einen mit dem Außenring 44 axial fest verbundenen Ringflansch 64 auf, an dem beispielsweise eine zeichnerisch nicht dargestellte Kupplungsgabel oder eine Ausrückschwinge angreifen kann.

Die Nebenabtriebskupplung 14 ist als nichtschaltbare Kupplung ausgebildet, d. h. die Nebenabtriebswelle 56 ist permanent mit der als Kupplungseingangswelle wirkenden Kurbelwelle 16 drehfest verbunden. Die Wirkverbindung zwischen diesen Wellen 16, 56 wird über ein scheibenförmiges Drehmomentübertragungselement 66 hergestellt, welches axial zwischen der Ausrückvorrichtung 40 und der Anpressplatte 22 und drehfest, mit dem Kupplungsgehäuse 20 umlaufend angeordnet ist. In einem radialen Mittenabschnitt, weist das Drehmomentübertragungselement 66 in Umfangsrichtung in der gezeigten Ansicht nicht sichtbare Ausnehmungen auf, durch welche die Anlagebereiche 36 der Anpressplatte 22 zur Anlage an die Membranfeder 24 hindurch ragen. Im radial inneren Bereich ist an dem Drehmomentübertragungselement 66 ein Torsionsschwingungsdämpfer 68 ausgebildet, dessen Ausgangsteil aus zwei axial beidseitig am Grundkörper des Drehmomentübertragungselements 66 anliegenden Deckblechen 70, 72 gebildet wird, die drehfest mit der Nabe 62 verbunden sind und somit die Wirkverbindung zu der Nebenabtriebswelle 56 herstellen. Die Verbindung 73 der Nabe 62 zu der Nebenabtriebswelle 56 erfolgt formschlüssig, z.B. mittels einer Keilwellenverbindung oder einer Kerbverzahnung.

Aus der Figur ist ersichtlich, dass sich in der dort dargestellten Ausgangslage der Ausrückeinrichtung 40 die Formschlussverbindung 73 mit als Führungselement dienenden Büchse 58 axial überdeckt. Somit kann durch den auf diese Weise zusätzlich gewonnenen Verbindungsbereich die Formschlussverbindung 73, insbesondere auch in Verbindung mit dem Torsionsschwingungsdämpfer 68, Drehmomentstößen der Kurbelwelle 16 besser standhalten. Der axial über die Formschlussverbindung 73 hinausstehende Axialfortsatz 60 der Nabe 62 erstreckt sich mindestens soweit in Richtung des Getriebes 34, dass bei einer in der Figur nach rechts erfolgenden Ausrückbewegung die Ausrückeinrichtung 40 vollständig auf dem Fortsatz 60 geführt werden kann. Die radiale Anordnung der Nabe 62 und der Büchse 58 gestattet somit eine axiale Überschneidung des Bereiches der Formschlussverbindung 73 mit einer Ausrückbetätigungswegstrecke 74 der Ausrückeinrichtung 40 bzw. einer zwischen der Ausrückeinrichtung 40 und dem Drehmomentübertragungselement 66 zum Ausgleich eines reibungsbehafteten Verschleißes der Kupplungsscheibe 26 vorgesehenen Kompensationswegstrecke 76.

### Bezugszeichenliste

- 10: Kupplungsanordnung
- 12: Reibungskupplung
- 14: Nebenabtriebskupplung
- 16: Kurbelwelle
- 18: Schwungrad
- 20: Kupplungsgehäuse
- 22: Anpressplatte
- 24: Membranfeder
- 26: Kupplungsscheibe
- 28: Dämpfungseinrichtung
- 30: Nabe
- 34: Gangwechselgetriebe
- 36: Anlagebereich
- 38: Federzunge
- 40: Ausrückeinrichtung
- 42: Ausrücklager
- 44: Außenring
- 46: Wälzkörper
- 48: Innenring
- 50: Ringnut
- 52: Lastring
- 54: Ausrückring
- 56: Nebenabtriebswelle
- 58: Büchse
- 60: Rohransatz
- 62: Nabe
- 64: Ringflansch
- 66: Drehmomentübertragungselement
- 68: Torsionsschwingungsdämpfer
- 70,72: Deckblech
- 73: Formschlussverbindung
- 74: Ausrückbetätigungswegstrecke
- 76: Kompensationswegstrecke

## Patentansprüche

1. Kupplungsanordnung für ein Kraftfahrzeug, umfassend
- eine Eingangswelle,
- eine Hauptabtriebswelle und eine Nebenabtriebswelle, welche beide ko-axial zu der Eingangswelle verlaufen,
- eine zwischen der Eingangswelle und der Hauptabtriebswelle angeordnete trennbare Reibungskupplung, welche über eine Ausrückfeder mit einer axial verschiebbar auf der Nebenabtriebswelle angeordneten Ausrückeinrichtung betätigbar ist,
- ein als Nebenabtriebskupplung ausgebildetes Drehmomentübertragungselement zur Verbindung der Eingangswelle mit der Nebenabtriebswelle, welches eine drehfest mit der Nebenabtriebswelle verbundene Nabe aufweist und wobei das Drehmomentübertragungselement axial zwischen der Reibungskupplung und deren Ausrückeinrichtung angeordnet ist,
**dadurch gekennzeichnet,**
**dass** die Ausrückeinrichtung (40) für die Reibungskupplung (12) auf der Nabe (62) des Drehmomentübertragungselements (66) angeordnet ist.

2. Kupplungsanordnung nach Anspruch 1,
**dadurch gekennzeichnet,**
**dass** das Drehmomentübertragungselement (66) einen Torsionsschwingungsdämpfer (68) aufweist.
